# EUROPEAN PATENT APPLICATION

(11) **EP 3 557 725 A1**
(43) Date of publication of application: **23.10.2019**
(21) Application number: 18187898.4
(22) Date of filing: 08.08.2018
(51) Int. Cl.: H02J 7/35, H02S 50/00, H02H 1/00, H02S 40/34, H02S 20/22, H02S 40/38

(54) **DEVICE, SYSTEM AND METHOD FOR CONTROLLING POWER ON/OFF OF SOLAR MODULE**

(30) Priority: 18.04.2018 CN 201820558437 U; 28.04.2018 CN 201810402230; 28.04.2018 CN 201820639124 U
(71) Applicant: Beijing Hanergy Solar Power Investment Co., Ltd., 101499 Beijing (CN)
(72) Inventor: PAN, Wei, Beijing 101499 (CN); LI, Hongjie, Beijing 101499 (CN)
(74) Representative: Cohausz & Florack

(57) **Abstract**

The disclosure provides a device, system and method for controlling power on or power off of a solar module. The device for controlling power on or power off of a solar module comprises: a microcontroller (12); a collecting device (10), which is electrically connected to the microcontroller (12) and configured to collect state information and transmit the collected state information to the microcontroller (12); and a switch component (13), which is electrically connected to the microcontroller (12) and the solar module (14), and configured to control power on or power off of the solar module (14) according to the state information received by the microcontroller (12).

## Description

### TECHNICAL FIELD

The present disclosure relates to but not limited to solar energy power generation, and in particularly relates to but not limited to a device, system and method for controlling power on or power off of a solar module.

### BACKGROUND

In order to make full use of solar energy and achieve energy conservation and environmental protection, there are already building curtain walls made of solar cells. Since each individual solar cell module has a low supply voltage, in order to ensure that the solar array can normally output current to a load, a plurality of solar cell modules need to be connected.

However, the output voltage of the connected solar array often exceeds the safe voltage value that the human body can withstand. In case of a fire or the like, a person may be damaged by the current output from the solar array when breaking the window. Therefore, under the condition of a fire or other disaster in a building, there is a technical problem that need to be solved urgently, i.e., how to power off the solar array in time to prevent electric shock from occurring when a person escapes by breaking the window and to ensure safety of the fire rescuers during the rescue.

### SUMMARY

The following is a summary of the subject matter described in detail in the disclosure. This summary is not intended to limit the scope of the claims.

According to one aspect of the disclosure, there is provided a device for controlling power on or power off of a solar module, comprising:
a microcontroller;
a collecting device being electrically connected to the microcontroller and configured to collect state information and transmit the collected state information to the microcontroller; and
a switch component being electrically connected to the microcontroller and the solar module, and configured to control power on or power off of the solar module according to the state information received by the microcontroller.

According to an embodiment of the disclosure, the state information may be state information about the solar module in itself.

According to an embodiment of the disclosure, the device for controlling power on or power off of a solar module may further comprise a communication device which is connected to the microcontroller and configured to communicatively connect the microcontroller to an external terminal.

According to an embodiment of the disclosure, the device for controlling power on or power off of a solar module may further comprise a power supply,
the power supply is electrically connected to the collecting device, the microcontroller, the communication device and the switch component, respectively; and
the solar module is electrically connected to the power supply and configured to charge the power supply.

According to an embodiment of the disclosure, the microcontroller may comprise a control instruction parsing device which is electrically connected to the communication device and configured to convert a control signal received by the communication device into a control instruction.

According to an embodiment of the disclosure, the device for controlling power on or power off of a solar module may be configured as at least one of following:
the collecting device may comprise a temperature collecting device electrically connected to the solar module, the microcontroller comprises a temperature comparator and a first switch control signal generator, the temperature collecting device, the temperature comparator, the first switch control signal generator and the switch component are electrically connected successively;
the collecting device may comprise a voltage detecting device electrically connected to the solar module, the microcontroller comprises a voltage comparator and a second switch control signal generator, the voltage detecting device, the voltage comparator, the second switch control signal generator and the switch component are electrically connected successively;
the collecting device may comprise a current detecting device electrically connected to the solar module, the microcontroller comprises a current comparator and a third switch control signal generator, the current detecting device, the current comparator, the third switch control signal generator and the switch component are electrically connected successively.

According to an embodiment of the disclosure, the state information may be a safety related environmental characteristic signal in an environment where the solar module is located.

According to an embodiment of the disclosure, the collecting device may be an environmental signal collector,
the environmental signal collector collects the safety related environmental characteristic signal in the environment where the solar module is located, and transmits the environmental characteristic signal to the microcontroller,
a signal input end of the microcontroller is electrically connected to a signal output end of the environmental information collector, a signal output end of the microcontroller is electrically connected to the switch component, and the microcontroller includes an intensity comparator,
two connecting ends of the switch component are respectively configured to be electrically connected to the solar module and an external device, and switch on or switch off a connection between the solar module and the external device.

According to an embodiment of the disclosure, the environmental signal collector may comprise a pickup,
an input end of the intensity comparator is electrically connected to an output end of the pickup, and an output end of the intensity comparator is electrically connected to the switch component.

According to an embodiment of the disclosure, the microcontroller may further comprise an audio recognizer,
an input end of the audio recognizer is electrically connected to the output end of the intensity comparator, and an output end of the audio recognizer is electrically connected to the switch component.

According to an embodiment of the disclosure, the environmental signal collector may comprise a smoke alarm,
the input end of the intensity comparator is electrically connected to the smoke alarm.

According to an embodiment of the disclosure, the environmental signal collector may comprise a temperature sensor,
the input end of the intensity comparator is electrically connected to the temperature sensor.

According to an embodiment of the disclosure, the switch component may comprise a single-pole double-throw switch,
a movable end and a first fixed end of the single-pole double-throw switch are both configured to be connected to the external device,
a second fixed end of the single-pole double-throw switch is configured to be connected to an output end of the solar module.

According to another aspect of the disclosure, there is provided a solar module system, comprising: a solar module, and a device connected to the solar module for controlling power on or power off of the solar module, the device comprising:
a microcontroller;
a collecting device being electrically connected to the microcontroller and configured to collect state information and transmit the collected state information to the microcontroller; and
a switch component being electrically connected to the microcontroller and the solar module, and configured to control power on or power off of the solar module according to the state information received by the microcontroller.

It should be understood that the device for controlling power on or power off of a solar module may be the device for controlling power on or power off of a solar module in any embodiment of the first respect.

According to still another aspect of the disclosure, there is provided a method for controlling power on or power off of a solar module, which may use the above device for controlling power on or power off of a solar module and comprise the steps of:
collecting an environmental characteristic signal relating to an environment safety level in an environment where the solar module is located;
determining whether the environmental characteristic signal is matched with a preconfigured triggering signal;
cutting off the connection between the solar module and an external device if the environmental characteristic signal is matched with the preconfigured triggering signal.

According to an embodiment of the disclosure, the environmental characteristic signal comprises at least one of the following signals: an acoustic signal, a smoke particle concentration, and a temperature;
the step of determining whether the environmental characteristic signal is matched with a preconfigured triggering signal comprises:
determining whether an intensity of the acoustic signal exceeds a preset intensity threshold, and/or determining whether the smoke particle concentration exceeds a preconfigured smoke particle concentration threshold, and/or determining whether the temperature exceeds a preconfigured temperature threshold;
determining that the environmental characteristic signal is matched with the preconfigured triggering signal, if the intensity of the acoustic signal exceeds the preset intensity threshold, and/or the smoke particle concentration exceeds the preconfigured smoke particle concentration threshold, and/or the temperature exceeds the preconfigured temperature threshold.

According to an embodiment of the disclosure, if the intensity of the acoustic signal exceeds the preset intensity threshold, the step of determining that the environmental characteristic signal is matched with a preconfigured triggering signal comprises:
determining whether the acoustic signal comprises a preconfigured frequency signal, if the intensity of the acoustic signal exceeds the preset intensity threshold;
determining that the environmental characteristic signal is matched with the preconfigured triggering signal, if the acoustic signal comprises a signal of a preconfigured frequency.

Other aspects will become apparent upon reading and understanding the drawings and detailed description.

### BRIEF DESCRIPTION OF DRAWINGS

Fig. 1 is a schematic diagram illustrating a configuration of a device for controlling power on/off of a solar module according to an exemplary embodiment of the disclosure;
Fig. 2 is a schematic diagram illustrating a configuration of a device for controlling power on/off of a solar module according to another exemplary embodiment of the disclosure;
Fig. 3 is a schematic diagram illustrating a configuration of a device for controlling power on/off of a solar module according to still another exemplary embodiment of the disclosure;
Fig. 4 is a schematic diagram illustrating a configuration of a device for controlling power on/off of a solar module according to still another exemplary embodiment of the disclosure;
Fig. 5 is a schematic diagram illustrating a configuration of a device for controlling power on/off of a solar module according to still another exemplary embodiment of the disclosure;
Fig. 6 is a schematic diagram illustrating a configuration of a device for controlling power on/off of a solar module according to still another exemplary embodiment of the disclosure;
Fig. 7 is a schematic diagram illustrating a configuration of a device for controlling power on/off of a solar module according to still another exemplary embodiment of the disclosure;
Fig. 8 is a flowchart of a method for controlling power on/off of a solar module according to an exemplary embodiment of the disclosure; and
Fig. 9 is a flowchart of a method for controlling power on/off of a solar module according to another exemplary embodiment of the disclosure.

### DETAILED DESCRIPTION

The present disclosure will now be further described in detail below in conjunction with the drawings and exemplary embodiments. It should be understood that the specific embodiments described below are used only for the purpose of explaining the disclosure instead of limiting the disclosure. It should be also noted that, for the convenience of description, only parts related to the disclosure are shown in the drawings.

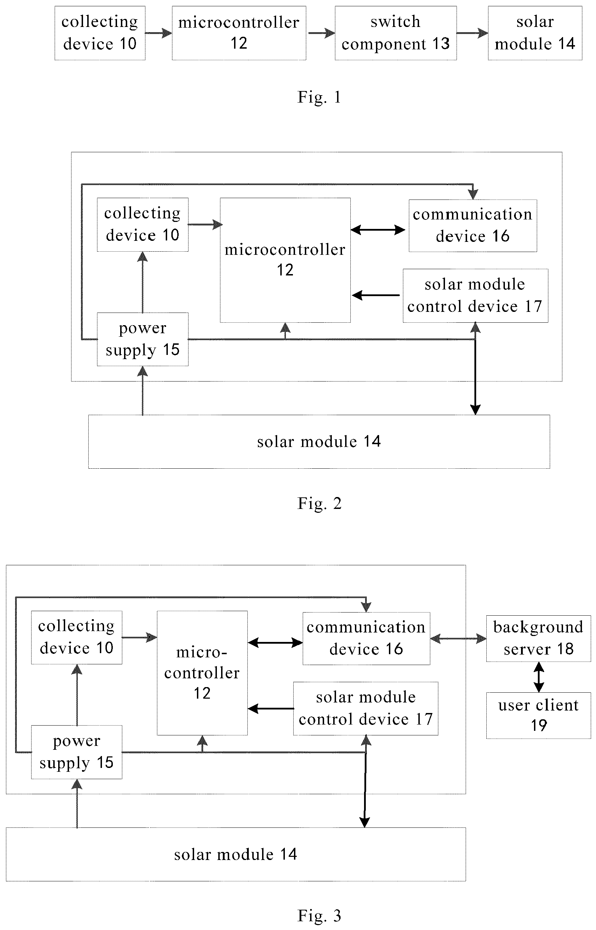

As shown in Fig. 1, an exemplary embodiment of the disclosure provides a device for controlling power on/off of a solar module to be applied to a solar module 14, the device includes a microcontroller 12, a collecting device 10, and a switch component 13.

In the exemplary embodiment, the collecting device 10 and the switch component 13 are respectively electrically connected to the microcontroller 12. The connection may be wired or wireless, and the specific connecting manner may be adjusted according to the use conditions. The collecting device 10 collects state information and transmits the collected state information to the microcontroller 12. Specifically, the collecting device 10 collects state information about the solar module 14 itself, to be specific, such as a voltage value, a current value, a temperature value and other parameter information about the solar module 14, and transmits the collected state information to the microcontroller 12. The microcontroller 12 determines whether a fire or other disaster is happening according to these parameters, and then further determines whether to power on/off the solar module 14.

In the exemplary embodiment, the switch component 13 is electrically connected to the solar module 14, where the switch component 13 is configured to control power on/off of the solar module 14 according to the information received by the microcontroller 12. The switch component 13 includes an electronic breaker with it power on or power off can be controlled by the microcontroller 12 according to actual requirements. The control algorithm may be implemented according to existing control algorithm, which will not be described in detail in this exemplary embodiment.

In a specific embodiment, Figs. 2 and 3 show a device for controlling power on/off of a solar module having another configuration, which differs from the device for controlling power on/off of a solar module in Fig. 1 in that: the device for controlling power on/off of a solar module further includes a communication device 16 which is connected to the microcontroller 12 and configured to connect the microcontroller 12 to an external terminal by communication.

In the exemplary embodiment, the communication device 16 is wirelessly connected to a background server 18 which is wirelessly connected to a user client 19 such as an App or a monitor. The communication device 16 transmits data in the microcontroller 12 to the background server 18. A user may obtain and display the data in the background server 18 in real time through the user client 19, and learn about a real-time state of the device for controlling power on/off of a solar module and the solar module 14. Meanwhile, the user may transmit a control signal to the background server 18 via the user client 19, and the background server 18 communicates with the microcontroller 12 to transmit the control signal to the microcontroller 12, thereby controlling the on/off of the solar module 14.

In the exemplary embodiment, the microcontroller 12 includes a control instruction parsing device which is electrically connected to the communication device 16 and configured to convert the control signal received by the communication device into a control instruction. For example, when the user client 19 transmits a control signal to the communication device 16 via the background server 18, the control instruction parsing device receives and parses the control signal received by the communication device 16 to obtain a corresponding control instruction and then transmit it to the switch component 13, thereby realizing the control of on/off of the solar module 14.

In the exemplary embodiment, the communication device 16 may also be connected to a fire alarm system. The communication device 16 may be connected to a fire alarm system of a building or construction where it is located, which transmits the fire information to the communication device 16 after learning the fire information. The communication device 16 transmits the fire information in time to the microcontroller 12 which analyzes the fire information and generates a control instruction via which the solar module 14 is powered off, thereby preventing the life of a fireman, an escaper or a maintainer from being threatened by the solar module 14.

In the exemplary embodiment, the device for controlling power on/off of a solar module further includes a power supply 15, which is electrically connected to the collecting device 10, the microcontroller 12, the communication device 16, and the switch component 13, respectively, and respectively supplies power to the collecting device 10, the microcontroller 12, the communication device 16, and the switch component 13 to ensure good operation of each device.

In the exemplary embodiment, the solar module 14 is electrically connected to and charges the power supply 15. By charging the power supply 15 with the solar module 14 in real time, an electricity amount of the power supply 15 is guaranteed, thus avoiding an insufficient electricity amount of the power supply 15 and reducing odds for each component within the device for power on/off of a solar module getting in a bad operation.

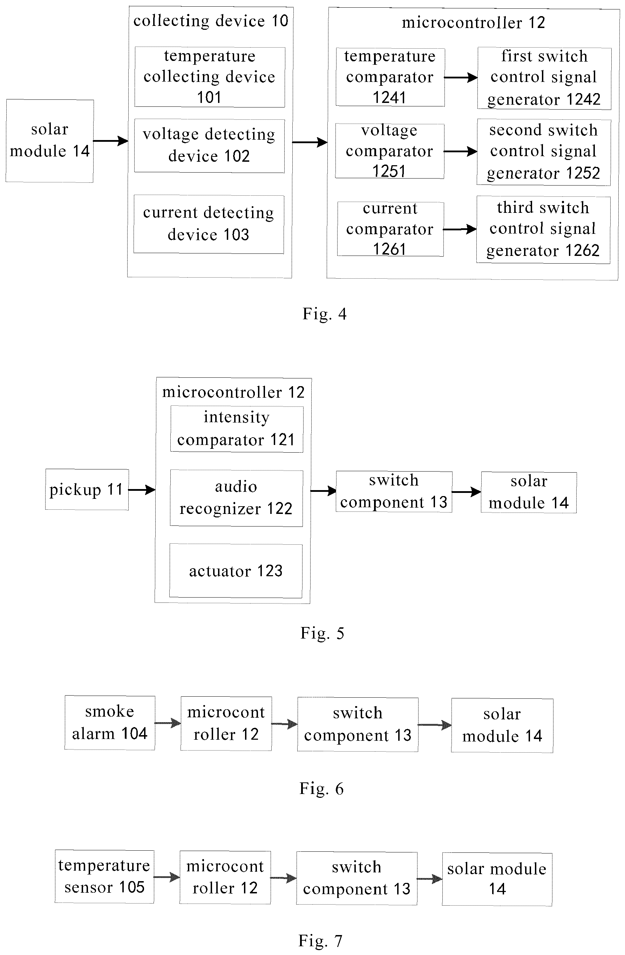

In a specific embodiment, Fig. 4 shows a device for controlling power on/off of a solar module having another configuration, which differs from the device for controlling power on/off of a solar module in Fig. 1 in that: the collecting device 10 includes a temperature collecting device 101, and the microcontroller 12 includes a temperature comparator 1241 and a first switch control signal generator1242. The temperature collecting device 101, the temperature comparator 1241, the first switch control signal generator 1242 and the switch component 13 are electrically connected successively. The temperature collecting device 101 is disposed at a back and/or a preset position within a preset position range of the solar module 14, and senses a temperature of the solar module 14 by a temperature sensor disposed at the back of the solar module 14, or collects an environmental temperature where the solar module 14 is located. The temperature comparator 1241 is used to determine whether the collected temperature exceeds a preset threshold, thus determine whether the solar module 14 is normal or whether there is a fire around the solar module 14, and upload the situation to the background server 18 in real time to notify the user. The first switch control signal generator 1242 is used to generate a control instruction and power off the solar module 14 in time, so as to prevent a fire caused by the solar module 14 and fire aggravation due to a continued power supply from the solar module 14, while preventing an electric shock damage caused by the solar module 14 to a fireman, an escaper or a maintainer.

In the exemplary embodiment, the collecting device 10 includes a voltage detecting device 102. The microcontroller 12 includes a voltage comparator 1251 and a second switch control signal generator 1252. The voltage detecting device 102 is electrically connected to the solar module 14. The voltage detecting device 102, the voltage comparator 1251, the second switch control signal generator 1252 and the switch component 13 are electrically connected successively. The collecting device 10 is electrically connected to, and collects a voltage parameter of, the solar module 14. The voltage comparator 1251 is used to compare the voltage parameter with a preset threshold to determine whether the voltage of the solar module 14 is abnormal. When the voltage of the solar module 14 is abnormal, the second switch control signal generator 1252 is used to generate a control instruction to control the switch component 13 to power off the solar module 14 in time, thus avoiding damage to the solar module 14.

In the exemplary embodiment, the collecting device 10 includes a current detecting device 103 electrically connected to the solar module 14. The microcontroller 12 includes a current comparator 1261 and a third switch control signal generator 1262. The current detecting device 103, the current comparator 1261, the third switch control signal generator 1262 and the switch component 13 are electrically connected successively. The current detecting device 103 collects a current parameter of the solar module 14. The current comparator 1261 is used to compare the current parameter with a preset threshold to determine whether the current of the solar module 14 is abnormal. When the current of the solar module 14 is abnormal, the third switch control signal generator 1262 is used to generate a control instruction to control the switch component 13 to power off the solar module 14 in time, thus avoiding damage to the solar module 14.

In the exemplary embodiment, by the collecting device 10, an environmental temperature, and a current, a voltage, as well as other parameters of the solar module 14 are collected in real time and transmitted to the microcontroller 12. The microcontroller 12 determines whether a fire or other disaster is happening according to these parameters, and then further determines whether to switch on/off the switch component 13 according to the result. Meanwhile, the microcontroller 12 transmits the environmental temperature, and the current, the voltage, as well as other parameters of the solar module 14 to the background server 18 via the communication device 16. The user checks theses parameters via the user client 19 in real time, thus facilitating monitoring of the state of the solar module 14 by the user. It should be understood that at least one of the environmental temperature, and the current and the voltage of the solar module 14 may be collected and transmitted to the microcontroller 12 by the collecting device 10 as needed.

In the exemplary embodiment, the collection device 10 may further include a real-time power generation amount detecting device, a collision detecting device or other device for the solar module 14, so as to respectively detect information such as a real-time power generation amount of the solar module 14 and whether the solar module 14 collides with other parts, thus facilitating real-time monitoring of a state of the solar module 14 by the user.

The exemplary embodiment of the disclosure further provides a solar module system including a solar module 14, a power supply network, and a device for controlling power on/off of a solar module connected between the solar module 14 and the power supply network.

The device for controlling power on/off of a solar module includes a microcontroller 12, a collecting device 10 and a switch component 13.

The collecting device 10 and the switch component 13 are respectively electrically connected to the microcontroller 12, and the collecting device 10 collects state information about the solar module 14 and transmits the collected state information to the microcontroller 12.

The switch component 13 is electrically connected to the solar module 14 and configured to control power on/off of the solar module 14 according to the information received by the microcontroller 12.

In the exemplary embodiment, by collecting the state information of the solar module 14, e.g., parameters such as a current or voltage, via the device for controlling power on/off of a solar module between the solar module 14 and the power supply network, the microcontroller 12 compares the state information of the solar module 14 and determines whether there is a fire or other natural disaster or whether the solar module 14 is abnormal. When there is a fire or other natural disaster and the solar module 14 is abnormal, the switch component 13 controls to power off the solar module 14 in time, thus preventing electric shock from occurring when a person escapes by breaking a window, ensuring safety of the fire rescuers during the rescue, and improving safety of the solar module 14 during usage.

In some cases, in the case of fire or other situations, a wired communication line may be destroyed by the fire, while a wireless communication signal may have a communication failure due to the plasma generated by the fire and an electromagnetic shielding environment of the building itself, which accordingly causes disconnection failure of the corresponding solar module, and thus an electric shock when a person breaks the window.

In view of such case, an exemplary embodiment of the disclosure provides a device and method for controlling power on/off of a solar module that can reliably power off a solar module in the case of a destroyed wire communication and a wireless communication failure.

Figs. 5 to 7 are schematic diagrams illustrating a configuration of the device for controlling power on/off of a solar module according to an exemplary embodiment of the disclosure. As shown in Figs. 1 and 5 to 7, the collecting device 10 is an environmental signal collector, and the state information described above is a safety related environmental characteristic signal in an environment where the solar module 14 is located. The environmental signal collector is configured to collect an environmental characteristic signal. A signal input end of the microcontroller 12 is connected to a signal output end of the environmental information collector, a signal output end of the microcontroller 12 is connected to a control end of the switch component 13, and the microcontroller outputs an on/off signal to the switch component according to the received environmental characteristic signal. Two connecting ends of the switch component 13 are respectively connected to the solar module 14 and an external device. When the two connecting ends are disconnected, the solar module 14 is disconnected from the external device.

In the above device for controlling power on/off between the solar module 14 and the external device, the type of the environmental signal collector is varied according to the type of the collected environmental signal. If the collected environmental signal is an acoustic signal, the environmental signal collector is the pickup 11 shown in Fig. 5; if the collected environmental signal is a smoke particle concentration or temperature, the environmental signal collector is the smoke alarm 104 shown in Fig. 6 or the temperature sensor 105 shown in Fig. 7.

With the environmental signal collector being the pickup 11, the microcontroller 12 may include an intensity comparator 121, an audio recognizer 122, and an actuator 123. A signal input end of the intensity comparator 121 is connected to a signal output end of the pickup 11, one signal input end of the audio recognizer 122 is connected to a signal output end of the intensity comparator 121, an output end of the audio recognizer 122 is connected to the actuator 123, and a signal output end of the actuator 123 is a control signal output end of the microcontroller 12.

With the environmental signal collector being the smoke alarm 104, the intensity comparator 121 in the microcontroller 12 may determine that the environmental characteristic signal is matched with a preconfigured triggering signal when the smoke particle concentration detected by the smoke alarm 104 exceeds a preconfigured smoke particle concentration threshold.

With the environmental signal collector being the temperature sensor 105, the intensity comparator 121 in the microcontroller 12 may determine that the environmental characteristic signal is matched with a preconfigured triggering signal when the temperature signal detected by the temperature sensor 105 exceeds a preconfigured temperature threshold.

In other exemplary embodiments, the environmental signal collector may be a combination of at least two of the pickup 11, the smoke alarm 104, and the temperature sensor 105. The microcontroller 12 determines that the environmental characteristic signal is matched with the preconfigured trigger signal only when the signals detected by the corresponding sensors simultaneously satisfy the conditions described above,

It should be noted that in the exemplary embodiment, the environmental signal collector should be disposed near the solar module 14. In practical applications, the environmental signal collector may be disposed at a back panel of the solar module 14.

After an acoustic signal is collected by the pickup 11 and transmitted to the microcontroller 12, the intensity comparator 121 first determines whether the intensity of the acoustic signal exceeds a preset intensity. Only when exceeding the preset intensity, the acoustic signal is transmitted to the audio recognizer 122 and triggers the audio recognizer 122 to operate. Only after the audio recognizer 122 recognizes and determines that the type of acoustic signal includes a preconfigured frequency, the actuator 123 is triggered to control the switch component 13 to disconnect the solar module 14 from the external device.

In the device for controlling power on/off of a solar module provided in the exemplary embodiment, the switch component 13 may be a single-pole single-throw switch. In practical applications, the single-pole single-throw switch may be a conventional relay switch, or an integrated switch in a semiconductor circuit.

In other exemplary embodiments, the switch component 13 may be a single-pole double-throw switch. In this case, a movable end and a first fixed end of the single-pole double-throw switch are both connected to the external device, and a second fixed end of the single-pole double-throw switch is connected to the solar module 14. If the switch component 13 implements the connection of the solar module 14 to the external device, the movable end is short-circuited to the first fixed end.

In case of the switch component 13 being a single-pole double-throw switch, it is preferable that the switch component 13 further includes a diode connected to the first fixed end and correspondingly disposed according to the position of the switch component 13 relative to the solar module 14 to prevent a reverse flow of the current, thus preventing the case where a high voltage of the external device is loaded into the solar module 14 and even causes personal injury.

Apparently, in other exemplary embodiments, the switch component 13 may be provided with two single-pole double-throw switches, the second fixed ends of which are connected to two ports of the solar module 14 respectively so that the solar module 14 is completely disconnected from the external device.

Various devices for controlling the power on/off of the solar module 14 and the external device provided in the disclosure are respectively described above. In addition to the above device, the present disclosure also provides a curtain wall system using the above device. Specifically, the curtain wall system includes a support mechanism and a panel mounted on an outer surface of the support mechanism. The panel is the solar module 14, and the above device is disposed between the solar module 14 and an external device. It should be noted that the above device should be disposed at a side of the curtain wall system facing a room.

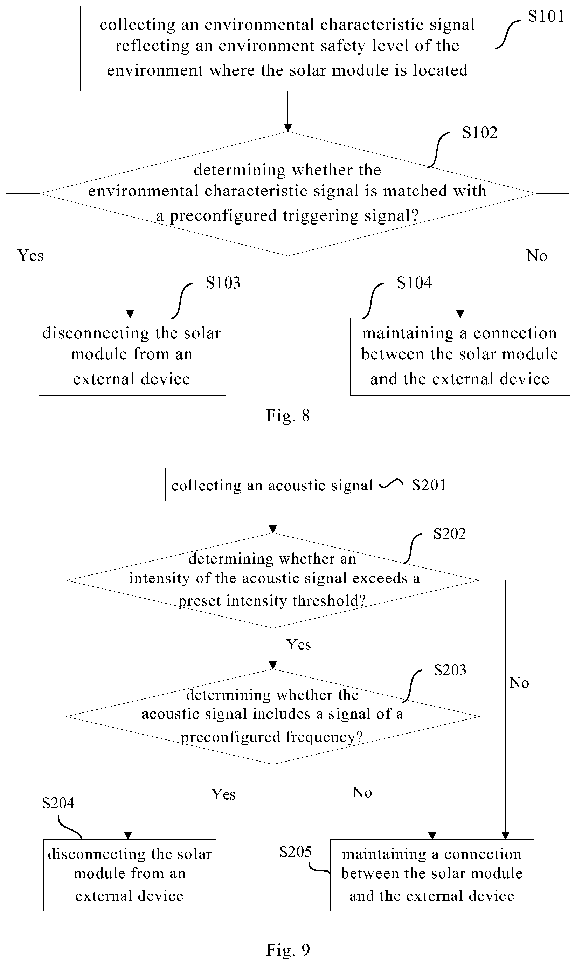

Fig. 8 is a flowchart of a method for controlling power on/off of a solar module and an external device according to an exemplary embodiment of the disclosure. As shown in Fig. 8, the method for controlling power on/off of a solar module and an external device provided in the exemplary embodiment of the disclosure includes steps S101 to S104. It should be noted that the method uses the device for controlling power on/off of a solar module as shown in Fig. 5.

At S101: collecting an environmental characteristic signal reflecting an environment safety level of the environment where the solar module is located.

In the exemplary embodiment, the environmental characteristic signal may be an acoustic signal. Accordingly, the hardware for collecting the environmental characteristic signal is a pickup. The pickup samples the acoustic signal, obtains acoustic information indicating the acoustic signal, and transmits the acoustic information to a microcontroller.

At S102: determining whether the environmental characteristic signal is matched with a preconfigured signal. If matched, proceed to S103; if not matched, proceed to S104.

After receiving the acoustic information transmitted by the pickup, the microcontroller determines whether the environmental characteristic signal represented by the acoustic information is matched with the preconfigured acoustic signal.

Specifically, the preconfigured acoustic signal may be an acoustic signal with a preset intensity. If an intensity of the acoustic signal represented by the acoustic information is greater than that of a preset acoustic signal, the acoustic signal is matched with the preconfigured acoustic signal; if the intensity of the acoustic signal represented by the acoustic information is smaller than or equal to that of the preset acoustic signal, the acoustic signal is not matched with a preconfigured acoustic signal.

In other exemplary embodiments, the microcontroller may also process the acoustic information, extract a frequency of the acoustic signal represented by the acoustic information, and compare the extracted frequency of the acoustic signal with that of an acoustic signal with a preset frequency, so as to determine whether the acoustic signal includes an acoustic signal of a preconfigured frequency, and then determine whether the subsequent step S103 or S104 is performed. If a preconfigured frequency is included, proceed to S103; if not, proceed to S104.

At S103: disconnecting the solar module from an external device.

At S104: maintaining a connection between the solar module and the external device.

If an intensity of the acoustic signal is greater than that of the preset acoustic signal, it is determined that an abnormal situation is present in the environment. For example, when the intensity of the acoustic signal is too large, a high-decibel fire alarm signal may appear in the environment. In this case, the connection between the solar module and the external device needs to be cut off to prevent a person from being damaged by the high voltage when the solar module is broken. If the intensity of the acoustic signal does not exceed the preset intensity, it may be determined that the environment is in a normal state. Then, the connection state of the solar module and the external device may be maintained. In the exemplary embodiment, the device for collecting the environmental characteristic signal is a pickup, and the corresponding environmental characteristic signal to be collected is an acoustic signal. In other exemplary embodiments, the device for collecting the environmental characteristic signal may also be a smoke alarm or a temperature sensor. The environmental characteristic signal collected by the smoke alarm is a smoke particle concentration, while the environmental characteristic signal collected by the temperature sensor is an environmental temperature.

Accordingly, the preconfigured triggering signal stored in the microcontroller should be a corresponding smoke particle concentration or temperature. Specifically, when the smoke particle concentration exceeds a preconfigured smoke particle concentration threshold, or the temperature exceeds a preconfigured temperature threshold, the connection state of the solar module and the external device is cut off.

In other exemplary embodiments, at least two of the acoustic signal, smoke particle concentration and temperature may be monitored simultaneously to determine whether to control on/off the solar module. Specifically, if the acoustic signal exceeds the preset intensity threshold, the smoke particle concentration exceeds the preconfigured smoke particle concentration threshold, and the temperature exceeds the preconfigured temperature threshold, it is determined that the environmental characteristic signal is matched with the preconfigured triggering signal.

In the exemplary embodiment, when an emergency such as a fire occurs, a trigger signal for triggering the disconnection of the solar module from the external device may be generated according to the characteristics of the monitored environmental signal (specifically, the strength of the environmental characteristic signal or whether there is a specific type of signal), so that the solar module is disconnected from the external device. Since the environmental characteristic signal is directly related to, but hardly interfered with, emergencies such as a fire, it is safer to use it as a corresponding control signal.

Fig. 9 is a flowchart of a method for controlling power on/off of a solar module and an external device according to another exemplary embodiment of the disclosure. As shown in Fig.9, in another exemplary embodiment, the above method includes steps S201 to S205.

At S201: collecting an acoustic signal.

At S202: determining whether an intensity of the acoustic signal exceeds a preset intensity threshold. If the intensity of the acoustic signal exceeds the preset intensity threshold, proceed to S203; if not, proceed to S205.

At S203: determining whether the acoustic signal includes an acoustic signal of a preconfigured frequency. If a signal of a preconfigured frequency is included, proceed to S204; if not, proceed to S205.

At S204: disconnecting the solar module from the external device.

At S205: maintaining the connection between the solar module and the external device.

In the exemplary embodiment, the collected environmental characteristic signal is also an acoustic signal, and the corresponding environmental signal collector is also a pickup. After an acoustic signal is collected by the pickup and transmitted to the microcontroller, the microcontroller first determines an intensity of the acoustic signal.

If the intensity of the acoustic signal does not exceed the preset intensity threshold, the microcontroller may determine that there is no high-decibel sound, and thus no corresponding alarm information, in the environment. If the intensity of the acoustic signal exceeds the preset intensity threshold, the microcontroller determines that there is a high-decibel sound in the environment, which indicates a high possibility of an accident such as a fire.

Then, the microcontroller determines whether the environmental characteristic signal includes an acoustic signal of a preconfigured frequency. If an acoustic signal of a preconfigured frequency is included, it is determined that a fire alarm signal is present, which indicates a fire, and then S204 is performed to disconnect the solar module from the external device.

In the exemplary embodiment, a module for determining the intensity of the acoustic signal in the microcontroller may be in a working state at all time, while a module for determining whether the acoustic signal of a preconfigured frequency is included in the acoustic signal may be in a standby low-power state, and be triggered to initiate only when the module for determining the intensity of the acoustic signal transmits a triggering signal. In this way, a lower consumption of the microcontroller and the electricity power may be achieved.

Apparently, in other exemplary embodiments, the step of monitoring the acoustic signal provided in this exemplary embodiment, and the steps of monitoring the smoke particle concentration and the temperature provided in the previous embodiments may be simultaneously implemented to form a method realizing simultaneous monitoring of the acoustic signal and the smoke particle concentration, of the acoustic signal and the temperature, or of the three.

The above description is merely an illustration of the preferred embodiments of the disclosure and principles of the applied technology in the disclosure. It should be understood by those skilled in the art that the disclosure scope of the present disclosure is not limited to the technical solutions formed by specific combinations of the above technical features, but shall cover any other technical solution formed by any combination of the above technical features or equivalent features thereof without departing from the above concepts of the disclosure, such as technical solutions formed by replacing the above features with technical features having similar functions disclosed in the present disclosure (but not limited thereto).

## Claims

1. A device for controlling power on or power off of a solar module, comprising:
a microcontroller (12);
a collecting device (10) being electrically connected to the microcontroller (12) and configured to collect state information and transmit the collected state information to the microcontroller (12); and
a switch component (13) being electrically connected to the microcontroller (12) and the solar module (14), and configured to control power on or power off of the solar module (14) according to the state information received by the microcontroller (12).

2. The device for controlling power on or power off of a solar module according to claim 1, wherein the state information is state information about the solar module (14) in itself.

3. The device for controlling power on or power off of a solar module according to claim 1, further comprising a communication device (16), wherein the communication device (16) is connected to the microcontroller (12) and configured to communicatively connect the microcontroller (12) to an external terminal.

4. The device for controlling power on or power off of a solar module according to claim 3, further comprising a power supply (15), wherein
the power supply (15) is electrically connected to the collecting device (10), the microcontroller (12), the communication device (16) and the switch component (13), respectively; and
the solar module (14) is electrically connected to the power supply (15) and configured to charge the power supply (15).

5. The device for controlling power on or power off of a solar module according to claim 3, wherein the microcontroller (12) comprises a control instruction parsing device which is electrically connected to the communication device (16) and configured to convert a control signal received by the communication device (16) into a control instruction.

6. The device for controlling power on or power off of a solar module according to claim 1, wherein the device is configured as at least one of following:
the collecting device (10) comprises a temperature collecting device (101) electrically connected to the solar module (14), the microcontroller (12) comprises a temperature comparator (1241) and a first switch control signal generator (1242), the temperature collecting device (101), the temperature comparator (1241), the first switch control signal generator(1242) and the switch component (13) are electrically connected successively;
the collecting device (10) comprises a voltage detecting device (102) electrically connected to the solar module (14), the microcontroller (12) comprises a voltage comparator (1251) and a second switch control signal generator (1252), the voltage detecting device (102), the voltage comparator (1251), the second switch control signal generator (1252) and the switch component (13) are electrically connected successively;
the collecting device (10) comprises a current detecting device (103) electrically connected to the solar module (14), the microcontroller (12) comprises a current comparator (1261) and a third switch control signal generator (1262), the current detecting device (103), the current comparator (1261), the third switch control signal generator (1262) and the switch component (13) are electrically connected successively.

7. The device for controlling power on or power off of a solar module according to claim 1, wherein the state information is a safety related environmental characteristic signal in an environment where the solar module (14) is located.

8. The device for controlling power on or power off of a solar module according to claim 7, wherein
the collecting device (10) is an environmental signal collector,
the environmental signal collector collects the safety related environmental characteristic signal in the environment where the solar module (14) is located, and transmits the environmental characteristic signal to the microcontroller (12),
a signal input end of the microcontroller (12) is electrically connected to a signal output end of the environmental information collector, a signal output end of the microcontroller (12) is electrically connected to the switch component (13), and the microcontroller (12) includes an intensity comparator (121),
two connecting ends of the switch component (13) are respectively configured to be electrically connected to the solar module (14) and an external device, and switch on or switch off a connection between the solar module (14) and the external device.

9. The device for controlling power on or power off of a solar module according to claim 8, wherein
the environmental signal collector comprises a pickup (11),
an input end of the intensity comparator (121) is electrically connected to an output end of the pickup (11), and an output end of the intensity comparator (121) is electrically connected to the switch component (13);
optionally, the environmental signal collector comprises a smoke alarm (104), the input end of the intensity comparator (121) is electrically connected to the smoke alarm (104);
optionally, the environmental signal collector comprises a temperature sensor (105),
the input end of the intensity comparator (121) is electrically connected to the temperature sensor (105).

10. The device for controlling power on or power off of a solar module according to claim 9, wherein
the microcontroller (12) further comprises an audio recognizer (122),
an input end of the audio recognizer (122) is electrically connected to the output end of the intensity comparator (121), and an output end of the audio recognizer (122) is electrically connected to the switch component (13).

11. The device for controlling power on or power off of a solar module according to any one of claims 8 to 10, wherein
the switch component (13) comprises a single-pole double-throw switch,
a movable end and a first fixed end of the single-pole double-throw switch are both configured to be connected to the external device,
a second fixed end of the single-pole double-throw switch is configured to be connected to an output end of the solar module (14).

12. A solar module system, comprising: a solar module (14), and a device connected to the solar module (14) for controlling power on or power off of the solar module (14), wherein the device comprises:
a microcontroller (12);
a collecting device (10) being electrically connected to the microcontroller (12) and configured to collect state information and transmit the collected state information to the microcontroller (12); and
a switch component (13) being electrically connected to the microcontroller (12) and the solar module (14), and configured to control power on or power off of the solar module (14) according to the state information received by the microcontroller (12).

13. A method for controlling power on or power off of a solar module, comprising the steps of:
collecting an environmental characteristic signal relating to an environment safety level in an environment where the solar module (14) is located;
determining whether the environmental characteristic signal is matched with a preconfigured triggering signal;
cutting off the connection between the solar module (14) and an external device if the environmental characteristic signal is matched with the preconfigured triggering signal.

14. The method for controlling power on or power off of a solar module according to claim 13, wherein
the environmental characteristic signal comprises at least one of the following signals: an acoustic signal, a smoke particle concentration, and a temperature;
the step of determining whether the environmental characteristic signal is matched with a preconfigured triggering signal comprises:
determining whether an intensity of the acoustic signal exceeds a preset intensity threshold, and/or determining whether the smoke particle concentration exceeds a preconfigured smoke particle concentration threshold, and/or determining whether the temperature exceeds a preconfigured temperature threshold;
determining that the environmental characteristic signal is matched with the preconfigured triggering signal, if the intensity of the acoustic signal exceeds the preset intensity threshold, and/or the smoke particle concentration exceeds the preconfigured smoke particle concentration threshold, and/or the temperature exceeds the preconfigured temperature threshold.

15. The method for controlling power on or power off of a solar module according to claim 14, wherein
the environmental characteristic signal comprises an acoustic signal;
if the intensity of the acoustic signal exceeds the preset intensity threshold, the step of determining that the environmental characteristic signal is matched with a preconfigured triggering signal comprises:
determining whether the acoustic signal comprises a preconfigured frequency signal, if the intensity of the acoustic signal exceeds the preset intensity threshold;
determining that the environmental characteristic signal is matched with the preconfigured triggering signal, if the acoustic signal comprises a signal of a preconfigured frequency.
